# FASCICULE DE BREVET EUROPEEN

(11) **EP 3 781 311 B1**
(45) Date de publication et mention de la délivrance du brevet: **05.06.2024**
(21) Numéro de dépôt: 19714443.9
(22) Date de dépôt: 05.04.2019
(51) Int. Cl.: B01J 37/02, B01J 37/18, B01J 37/20, B01J 21/04, B01J 23/755, B01J 23/89, C10G 45/00, B01J 37/08

(54) **PROCEDE DE PREPARATION D'UN CATALYSEUR BIMETALLIQUE A BASE DE NICKEL ET DE CUIVRE POUR L'HYDROGENATION DE COMPOSES AROMATIQUES**
VERFAHREN ZUR HERSTELLUNG EINES BIMETALLISCHEN KATALYSATORS AUF NICKEL- UND KUPFERBASIS ZUR HYDRIERUNG AROMATISCHER VERBINDUNGEN
METHOD FOR PREPARING A NICKEL- AND COPPER-BASED BIMETALLIC CATALYST FOR HYDROGENATING AROMATIC COMPOUNDS

(30) Priorité: 18.04.2018 FR 1853388
(43) Date de publication de la demande: 24.02.2021
(73) Titulaire: IFP Energies nouvelles, 92852 Rueil-Malmaison (FR)
(72) Inventeur: BOUALLEG, Malika, 92852 RUEIL-MALMAISON CEDEX (FR); QUOINEAUD, Anne-Agathe, 92852 RUEIL-MALMAISON CEDEX (FR)
(74) Mandataire: IFP Energies nouvelles
(86) Numéro de dépôt international: PCT/EP2019/058581
(87) Numéro de publication internationale: WO 2019/201618

(56) Documents cités:
- WO-A1-2007/084471
- US-A- 5 948 942
- US-A1- 2011 160 503
- US-A1- 2016 264 882
- Yusuke Yamada ET AL: "Synergistic effects of Ni and Cu supported on TiO 2 and SiO 2 on photocatalytic H 2 evolution with an electron donor-acceptor linked molecule", Catalysis Science & Technology, vol. 5, no. 2, 1 January 2015 (2015-01-01) , pages 979-988, XP055532661, UK ISSN: 2044-4753, DOI: 10.1039/C4CY01128G
- LOE RYAN ET AL: "Effect of Cu and Sn promotion on the catalytic deoxygenation of model and algal lipids to fuel-like hydrocarbons over supported Ni catalysts", APPLIED CATALYSIS B. ENVIRONMENTAL, ELSEVIER, AMSTERDAM, NL, vol. 191, 14 March 2016 (2016-03-14), pages 147-156, XP029500330, ISSN: 0926-3373, DOI: 10.1016/J.APCATB.2016.03.025
- OBREGÓN IKER ET AL: "Structure-activity relationships of Ni-Cu/Al2O3catalysts for [gamma]-valerolactone conversion to 2-methyltetrahydrofuran", APPLIED CATALYSIS B. ENVIRONMENTAL, ELSEVIER, AMSTERDAM, NL, vol. 210, 2 April 2017 (2017-04-02), pages 328-341, XP029992277, ISSN: 0926-3373, DOI: 10.1016/J.APCATB.2017.04.006
- Bhogeswararao Seemala ET AL: "Effects of Cu-Ni Bimetallic Catalyst Composition and Support on Activity, Selectivity, and Stability for Furfural Conversion to 2-Methyfuran", ACS Sustainable Chemistry & Engineering, vol. 6, no. 2, 21 December 2017 (2017-12-21), pages 2152-2161, XP055532205, US ISSN: 2168-0485, DOI: 10.1021/acssuschemeng.7b03572

## Description

### Domaine technique

La présente invention concerne un procédé de préparation d'un catalyseur métallique supporté, comprenant du nickel et du cuivre, destiné particulièrement à l'hydrogénation des hydrocarbures insaturés.

La présente invention porte également sur l'utilisation de ces catalyseurs dans des réactions d'hydrogénation d'hydrocarbures insaturés, et plus particulièrement, en hydrogénation de composés aromatiques.

### Etat de la technique

Les catalyseurs d'hydrogénation de composés aromatiques sont généralement à base de métaux du groupe VIII de la classification périodique des éléments tel que le nickel. Le métal se présente sous la forme de particules métalliques nanométriques déposées sur un support qui peut être un oxyde réfractaire. La teneur en métal du groupe VIII, la présence éventuelle d'un deuxième élément métallique, la taille des particules de métal et la répartition de la phase active dans le support ainsi que la nature et distribution poreuse du support sont des paramètres qui peuvent avoir une importance sur les performances des catalyseurs.

La vitesse de la réaction d'hydrogénation est gouvernée par plusieurs critères, tels que la diffusion des réactifs vers la surface du catalyseur (limitations diffusionnelles externes), la diffusion des réactifs dans la porosité du support vers les sites actifs (limitations diffusionnelles internes) et les propriétés intrinsèques de la phase active telles que la taille des particules métalliques et la répartition de la phase active au sein du support.

La promotion de catalyseur à base de nickel a fréquemment été proposée afin d'améliorer les performances en hydrogénation d'hydrocarbures insaturés. Par exemple, la promotion de catalyseur à base de nickel a fréquemment été proposée afin d'améliorer les performances en hydrogénation sélective. A titre d'illustration, le brevet US 5,208,405 divulgue un catalyseur à base de nickel et d'argent pour l'hydrogénation sélective de dioléfines en C4-C10. D'autre part, il est connu de promouvoir le nickel, présent majoritairement, avec des métaux du groupe IB, en particulier l'or (FR 2,949,077) ou de l'étain (FR 2,949,078). Le document FR 3,011,844 divulgue un catalyseur pour la mise en oeuvre d'un procédé d'hydrogénation sélective comprenant un support et une phase métallique active déposée sur le support, la phase métallique active comprenant du cuivre et au moins un métal de nickel ou de cobalt dans un ratio molaire Cu : (Ni et/ou Co) supérieur à 1.

Par ailleurs, préalablement à l'utilisation de tels catalyseurs et leur mise en oeuvre dans un procédé d'hydrogénation, une étape de traitement réducteur en présence d'un gaz réducteur est réalisée de manière à obtenir un catalyseur comprenant une phase active au moins partiellement sous forme métallique. Ce traitement permet d'activer le catalyseur et de former des particules métalliques. Ce traitement peut être réalisé in-situ ou ex-situ, c'est-à-dire après ou avant le chargement du catalyseur dans le réacteur d'hydrogénation. Le document D2 (US 5,948,942) divulgue un procédé de préparation d'un catalyseur d'hydrogénation sélective comprenant une phase active bimétallique à base de nickel sous forme totalement réduite et du cuivre sous forme partiellement réduite, la teneur en nickel étant comprise entre 10-50% en poids en élément Ni par rapport au poids total du catalyseur et la teneur en cuivre pouvant être comprise entre 0,005 et 30% en poids par rapport au poids total du catalyseur, le ratio molaire entre le cuivre et le nickel étant inférieur à 1 et un support pouvant être un oxyde réfractaire, lequel procédé comprend les étapes suivantes: a) une étape de mise en contact du support avec au moins une solution contenant au moins un précurseur de nickel ; b) une étape d'imprégnation en phase aqueuse du support avec du cuivre; c) une étape de séchage du précurseur de catalyseur obtenu à l'issue des étapes précédentes à une température inférieure à 250°C; d) au moins deux étapes de réduction des précurseurs de métal: d1) une étape de réduction du nickel à une température supérieure à 400°C et pendant une durée d'au moins 8 heures ; d2) une étape de réduction du cuivre à une température inférieure à 350°C pendant moins de 15 heures.

### Objets de l'invention

Poursuivant ses recherches dans le domaine des catalyseurs hydrogénants, la Demanderesse a maintenant découvert que l'on pouvait préparer des catalyseurs particulièrement actifs, et particulièrement sélectifs, en hydrogénation de composés aromatiques, en mettant en contact sur un support poreux, successivement et non simultanément, deux précurseurs métalliques spécifiques, choisis parmi les précurseurs de nickel, et, les précurseurs de cuivre, dans un ratio Cu : Ni spécifique, et en réalisant postérieurement à ces étapes de mise en contact, une étape de réduction *in-situ* dans le réacteur catalytique en présence d'un gaz réducteur, à une température inférieure à 200°C. Sans vouloir être lié par une quelconque théorie, il a été constaté par la Demanderesse que lors de la préparation du catalyseur, la présence de cuivre améliore fortement la réductibilité du nickel sur le support, et cela quel que soit l'ordre d'ajout des précurseurs métalliques (nickel et cuivre), ce qui permet de réaliser une étape de réduction des éléments métalliques en présence d'un gaz réducteur à des températures plus basses et des temps de réaction plus court que ceux couramment utilisés dans l'art antérieur. Le recours à des conditions opératoires moins sévères que dans l'art antérieur permet de réaliser directement l'étape de réduction au sein du réacteur dans lequel on souhaite réaliser l'hydrogénation de composés aromatiques. Par ailleurs, la présence de cuivre dans le catalyseur permet d'augmenter la résistance du catalyseur lorsque ce dernier est mis en contact avec une charge hydrocarbonée comprenant du soufre. En effet, par rapport au nickel, le cuivre présent dans le catalyseur capte plus facilement les composés soufrés compris dans la charge, ce qui évite donc d'empoisonner irréversiblement les sites actifs les plus virulents du nickel qui existent sur le catalyseur neuf. Enfin, le procédé de préparation selon l'invention permet notamment, par le fait de réaliser deux étapes distinctes d'imprégnation des précurseurs métalliques sur le support, d'éviter la formation d'alliages à base de nickel et de cuivre, qui ne sont pas souhaités dans le cadre de la présente invention. En effet un alliage de Nickel-Cuivre conduirait à une activité et/ou une sélectivité moins bonnes de celles du nickel seul.

La présente invention a pour objet un procédé de préparation d'un catalyseur d'hydrogénation de composés aromatiques ou polyaromatiques comprenant une phase active bimétallique à base d'un premier élément métallique de nickel, à raison de 10 et 50 % en poids en élément nickel par rapport au poids total du catalyseur, et d'un second élément métallique de cuivre, à raison de 0,5 à 15 % en poids en élément cuivre par rapport au poids total du catalyseur, le ratio molaire entre le cuivre et le nickel étant inférieur à 1, et un support comprenant au moins un oxyde réfractaire choisi parmi la silice, l'alumine et la silice-alumine, lequel procédé comprenant les étapes suivantes :
a) on réalise au moins une étape de mise en contact du support avec au moins une solution contenant au moins un précurseur de nickel ;
b) on réalise une étape de mise en contact du support avec au moins une solution contenant au moins un précurseur de cuivre ;
   les étapes a) et b) étant réalisées séparément dans un ordre indifférent ;
c) on réalise au moins une étape de séchage du précurseur de catalyseur à l'issue de l'étape a) et b), ou b) et a), à une température inférieure à 250°C ;
d) on approvisionne le précurseur de catalyseur obtenu à l'issue de l'étape c) dans un réacteur d'hydrogénation de composés aromatiques, et on effectue une étape de réduction par mise en contact dudit précurseur avec un gaz réducteur à une température inférieure à 200°C pendant une période supérieure ou égale à 5 minutes et inférieure 2 heures ;
e) on réalise une étape de passivation du catalyseur obtenu à l'étape d) par un composé soufré.

De préférence, on réalise l'étape b) avant l'étape a).

Avantageusement, l'étape d) est réalisée à une température comprise entre 130 et 190°C.

Avantageusement, l'étape d) est réalisée entre 10 minutes et 110 minutes.

De préférence, l'étape e) est réalisée à une température comprise entre 20 et 350°C pendant 10 à 240 minutes.

Plus préférentiellement, à l'étape e) le composé soufré est choisi parmi le thiophène, le thiophane, le diméthylsulfure, le diéthylsulfure, le dipropylsulfure, le propylméthylsulfure, le di-thio-di-éthanol.

Avantageusement, on réalise entre l'étape a) et b) une étape de séchage du précurseur de catalyseur à une température inférieure à 250°C.

Avantageusement, la teneur en cuivre est comprise entre de 0,5 et 12 % poids en élément cuivre par rapport au poids total du catalyseur.

De préférence, le précurseur de cuivre est choisi parmi l'acétate de cuivre, l'acétylacétonate de cuivre, le nitrate de cuivre, le sulfate de cuivre, le chlorure de cuivre, le bromure de cuivre, l'iodure de cuivre ou le fluorure de cuivre.

Plus préférentiellement, le précurseur de cuivre est le nitrate de cuivre.

Avantageusement, le gaz réducteur de l'étape d) est le dihydrogène.

De préférence, le débit d'hydrogène, exprimé en L/heure/gramme de précurseur de catalyseur est compris entre 0,01 et 100 L/heure/gramme de précurseur de catalyseur.

Avantageusement, on réalise avant l'étape d) une étape de traitement thermique du précurseur de catalyseur séché obtenu à l'étape c) à une température comprise entre 250 et 1000°C.

De préférence, le support est une alumine.

Un autre objet selon l'invention concerne un procédé d'hydrogénation d'au moins un composé aromatique ou polyaromatique contenu dans une charge d'hydrocarbures ayant un point d'ébullition final inférieur ou égal à 650°C, ledit procédé étant réalisé en phase gazeuse ou en phase liquide, à une température comprise entre 30 et 350°C, à une pression comprise entre 0,1 et 20 MPa, à un ratio molaire hydrogène/(composés aromatiques à hydrogéner) entre 0,1 et 10 et à une vitesse volumique horaire V.V.H. comprise entre 0,05 et 50 h⁻¹, en présence d'un catalyseur obtenu selon le procédé de préparation selon l'invention.

### Description détaillée de l'invention

### 1. Définitions

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

Le taux de réduction (TR) d'un métal M contenu dans le catalyseur est défini comme étant le pourcentage dudit métal M réduit après l'étape de réduction dudit catalyseur. Le taux de réduction (TR) correspond au ratio entre la quantité de métal réduit (M1) et la quantité de métal théoriquement réductible présente sur le catalyseur mesurée par Fluorescence X (M2), soit TR (%) = (M1/M2)x100. Dans le cadre de la présente invention, le taux de réduction du nickel (Ni) a été mesuré par analyse diffraction de rayons X (DRX ou *« X-ray diffraction »* selon la terminologie anglo-saxonne). La description de la méthode de mesure de la quantité de métal réductible sur des catalyseurs oxydes est explicitée plus loin dans la description (cf. partie exemples, paragraphe c)).

On entend par la surface spécifique du catalyseur ou du support utilisé pour la préparation du catalyseur selon l'invention, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society », 60, 309, (1938).

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est inférieure à 2 nm.

On entend par volume poreux total du catalyseur ou du support utilisé pour la préparation du catalyseur selon l'invention le volume mesuré par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage « Techniques de l'ingénieur, traité analyse et caractérisation », pages 1050-1055, écrit par Jean Charpin et Bernard Rasneur.

Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Le volume des macropores et des mésopores est mesuré par porosimétrie par intrusion de mercure selon la norme ASTM D4284-83 à une pression maximale de 4000 bar (400 MPa), utilisant une tension de surface de 484 dyne/cm et un angle de contact de 140°. On fixe à 0,2 MPa la valeur à partir de laquelle le mercure remplit tous les vides intergranulaires, et on considère qu'au-delà le mercure pénètre dans les pores de l'échantillon.

Le volume macroporeux du catalyseur ou du support utilisé pour la préparation du catalyseur selon l'invention est défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux du catalyseur ou du support utilisé pour la préparation du catalyseur selon l'invention est défini comme étant le volume cumulé de mercure introduit à une pression comprise entre 30 MPa et 400 MPa, correspondant au volume contenu dans les pores de diamètre apparent compris entre 2 et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

On définit également le diamètre médian mésoporeux comme étant le diamètre tel que tous les pores, parmi l'ensemble des pores constituant le volume mésoporeux, de taille inférieure à ce diamètre constituent 50% du volume mésoporeux total déterminé par intrusion au porosimètre à mercure.

On définit également le diamètre médian macroporeux comme étant le diamètre tel que tous les pores, parmi l'ensemble des pores constituant le volume macroporeux, de taille inférieure à ce diamètre constituent 50% du volume macroporeux total déterminé par intrusion au porosimètre à mercure.

### 2. Description

### Procédé de préparation du catalyseur

Le procédé de préparation du catalyseur bimétallique, comprenant une phase active à base de nickel et de cuivre, et un support comprenant au moins un oxyde réfractaire choisi parmi la silice, l'alumine et la silice-alumine, comprend au moins les étapes suivantes :
a) on réalise au moins une étape de mise en contact du support avec au moins une solution contenant au moins un précurseur de nickel ;
b) on réalise une étape de mise en contact du support avec au moins une solution contenant au moins un précurseur de cuivre ;
   les étapes a) et b) étant réalisées séparément dans un ordre indifférent ;
c) on réalise au moins une étape de séchage du précurseur de catalyseur à l'issue de l'étape a) et b), ou b) et a), à une température inférieure à 250°C ;
d) on approvisionne le précurseur de catalyseur obtenu à l'issue de l'étape c) dans un réacteur d'hydrogénation de composés aromatiques ou polyaromatiques, et on effectue une étape de réduction par mise en contact dudit précurseur avec un gaz réducteur à une température inférieure à 200°C pendant une période supérieure ou égale à 5 minutes et inférieure 2 heures ;
e) on réalise une étape de passivation du catalyseur obtenu à l'étape d) par un composé soufré.

Les étapes du procédé de préparation du catalyseur sont explicitées en détail ci-après.

### Etape a) Mise en contact du précurseur de nickel

Le dépôt du nickel sur ledit support, conformément à la mise en oeuvre de l'étape a), peut être réalisé par imprégnation, à sec ou en excès, ou encore par dépôt - précipitation, selon des méthodes bien connues de l'Homme du métier.

Ladite étape a) est préférentiellement réalisée par imprégnation du support consistant par exemple en la mise en contact dudit support avec au moins une solution, aqueuse ou organique (par exemple le méthanol ou l'éthanol ou le phénol ou l'acétone ou le toluène ou le diméthylsulfoxyde (DMSO)) ou bien constituée d'un mélange d'eau et d'au moins un solvant organique, contenant au moins un précurseur de nickel au moins partiellement à l'état dissous, ou encore en la mise en contact dudit support avec au moins une solution colloïdale d'au moins un précurseur du nickel, sous forme oxydée (nanoparticules d'oxyde, d'oxy(hydroxyde) ou d'hydroxyde du nickel) ou sous forme réduite (nanoparticules métalliques du nickel à l'état réduit). De préférence, la solution est aqueuse. Le pH de cette solution pourra être modifié par l'ajout éventuel d'un acide ou d'une base. Selon une autre variante préférée, la solution aqueuse peut contenir de l'ammoniaque ou des ions ammonium NH₄⁺.

De manière préférée, ladite étape a) est réalisée par imprégnation à sec, laquelle consiste à mettre en contact le support du catalyseur avec une solution, contenant au moins un précurseur du nickel, dont le volume de la solution est compris entre 0,25 et 1,5 fois le volume poreux du support à imprégner.

Lorsque le précurseur de nickel est introduit en solution aqueuse, on utilise avantageusement un précurseur de nickel sous forme de nitrate, de carbonate, d'acétate, de chlorure, d'hydroxyde, d'hydroxycarbonate, d'oxalate, de sulfate, de formiate, de complexes formés par un polyacide ou un acide-alcool et ses sels, de complexes formés avec les acétylacétonates, de complexes tétrammine ou hexammine, ou encore de tout autre dérivé inorganique soluble en solution aqueuse, laquelle est mise en contact avec ledit support.

De manière préférée, on utilise avantageusement comme précurseur de nickel, le nitrate de nickel, l'hydroxyde de nickel, le carbonate de nickel, le chlorure de nickel, ou le hydroxycarbonate de nickel. De manière très préférée, le précurseur de nickel est le nitrate de nickel, le carbonate de nickel ou le hydroxyde de nickel.

Les quantités du ou des précurseurs de nickel introduites dans la solution sont choisies de telle manière que la teneur totale en nickel est comprise entre 10 et 50 % poids, de préférence comprise entre 14 et 45 % poids, de manière préférée comprise entre 20 et 40% poids dudit élément par rapport au poids total du catalyseur. Dans le mode de réalisation dans lequel l'étape a) est réalisée par imprégnation, à sec ou en excès, de préférence à sec, l'imprégnation du nickel avec le support peut être avantageusement réalisée via au moins deux cycles d'imprégnation, en utilisant des précurseurs de nickel identiques ou différents à chaque cycle. Dans ce cas, chaque imprégnation est avantageusement suivie d'un séchage et éventuellement d'un traitement thermique.

### Etape b) Mise en contact du précurseur de cuivre

Le dépôt du cuivre sur ledit support, conformément à la mise en oeuvre de l'étape b), peut être réalisé par imprégnation, à sec ou en excès, ou encore par dépôt - précipitation, selon des méthodes bien connues de l'Homme du métier.

Ladite étape b) est réalisée par imprégnation du support en la mise en contact dudit support avec au moins une solution, aqueuse contenant au moins un précurseur de cuivre au moins partiellement à l'état dissous, Le pH de cette solution pourra être modifié par l'ajout éventuel d'un acide ou d'une base.

De manière préférée, ladite étape b) est réalisée par imprégnation à sec, laquelle consiste à mettre en contact le support du catalyseur avec une solution, contenant au moins un précurseur de cuivre, dont le volume de la solution est compris entre 0,25 et 1,5 fois le volume poreux du support à imprégner.

Lorsque le précurseur de cuivre est introduit en solution aqueuse, on utilise avantageusement un précurseur de cuivre sous forme minérale ou organique. Sous forme minérale, le précurseur de cuivre peut être choisi parmi l'acétate de cuivre, l'acétylacétonate de cuivre, le nitrate de cuivre, le sulfate de cuivre, le chlorure de cuivre, le bromure de cuivre, l'iodure de cuivre ou le fluorure de cuivre. De manière très préférée, le sel précurseur du cuivre est le nitrate de cuivre.

Les quantités du ou des précurseurs de cuivre introduites dans la solution sont choisies de telle manière que la teneur totale en cuivre est comprise entre 0,5 et 15 % en poids en élément cuivre par rapport au poids total du catalyseur, de préférence comprise entre 0,5 et 12 % poids, de manière préférée comprise entre 0,75 et 10 % poids, et encore plus préférentiellement entre 1 et 9% en poids.

Les étapes a) et b) sont réalisées séparément, dans un ordre indifférent. L'imprégnation du précurseur de nickel n'est pas réalisée en même temps que l'imprégnation du précurseur de cuivre, de manière à ne pas former d'alliage à base de nickel-cuivre ou, qui n'est pas souhaitable dans le cadre de la présente invention car cela conduirait à une activité et/ou une sélectivité moins bonnes que celle du nickel seul, ce qui n'est pas souhaitée dans le cadre de la présente invention.

De manière préférée, on réalise l'étape b) avant l'étape a), c'est-à-dire qu'on réalise une première étape d'imprégnation du support avec un précurseur de cuivre, puis on réalise une seconde étape d'imprégnation du support avec un précurseur de nickel (pré-imprégnation). La Demanderesse a découvert que la pré-imprégnation (vis-à-vis de l'imprégnation du précurseur de nickel) d'un précurseur de cuivre sur le support permet d'obtenir des meilleurs résultats en terme de réductibilité du nickel par rapport à une post-imprégnation du précurseur de cuivre (vis-à-vis de l'imprégnation du précurseur de nickel), et cela pour des conditions opératoires de réduction du catalyseur identiques (température, temps, gaz réducteur).

Optionnellement, entre les deux étapes d'imprégnation successives, on réalise une étape de séchage du précurseur de catalyseur effectuée à une température inférieure à 250°C, de préférence comprise entre 15 et 240°C, plus préférentiellement entre 30 et 220°C, encore plus préférentiellement entre 50 et 200°C, et de manière encore plus préférentielle entre 70 et 180°C, pendant une durée typiquement comprise entre 10 minutes et 24 heures.

### Etape c) Séchage du support imprégné

L'étape c) de séchage du support imprégné est effectuée à une température inférieure à 250°C, de préférence comprise entre 15 et 180°C, plus préférentiellement entre 30 et 160°C, encore plus préférentiellement entre 50 et 150°C, et de manière encore plus préférentielle entre 70 et 140°C, pendant une durée typiquement comprise entre 10 minutes et 24 heures. Des durées plus longues ne sont pas exclues, mais n'apportent pas nécessairement d'amélioration.

L'étape de séchage peut être effectuée par toute technique connue de l'Homme du métier. Elle est avantageusement effectuée sous une atmosphère inerte ou sous une atmosphère contenant de l'oxygène ou sous un mélange de gaz inerte et d'oxygène. Elle est avantageusement effectuée à pression atmosphérique ou à pression réduite. De manière préférée, cette étape est réalisée à pression atmosphérique et en présence d'air ou d'azote.

### Traitement thermique du catalyseur séché (étape optionnelle)

Le précurseur de catalyseur séché peut subir une étape complémentaire de traitement thermique, avant l'étape d) de réduction, à une température comprise entre 250 et 1000°C et de préférence entre 250 et 750°C, pendant une durée typiquement comprise entre 15 minutes et 10 heures, sous une atmosphère inerte ou sous une atmosphère contenant de l'oxygène, en présence d'eau ou non. Des durées de traitement plus longues ne sont pas exclues, mais n'apportent pas nécessaire d'amélioration.

On entend par « traitement thermique » le traitement en température respectivement sans présence ou en présence d'eau. Dans ce dernier cas, le contact avec la vapeur d'eau peut se dérouler à pression atmosphérique ou en pression autogène. Plusieurs cycles combinés sans présence ou avec présence d'eau peuvent être réalisés. Après ce ou ces traitement(s), le précurseur de catalyseur comprend du nickel sous forme oxyde, c'est-à-dire sous forme NiO.

En cas de présence d'eau, la teneur en eau est de préférence comprise entre 150 et 900 grammes par kilogramme d'air sec, et de manière encore plus préférée, entre 250 et 650 grammes par kilogramme d'air sec.

### Etape d) Réduction par un gaz réducteur

Préalablement à l'utilisation du catalyseur dans le réacteur catalytique et la mise en oeuvre d'un procédé d'hydrogénation, on effectue une étape de traitement réducteur d) en présence d'un gaz réducteur de manière à obtenir un catalyseur comprenant du nickel au moins partiellement sous forme métallique. Cette étape est réalisée *in-situ* c'est-à-dire après le chargement du catalyseur dans un réacteur d'hydrogénation de composés aromatiques ou polyaromatiques. Ce traitement permet d'activer ledit catalyseur et de former des particules métalliques, en particulier du nickel à l'état zéro valent. La réalisation *in-situ* du traitement réducteur du catalyseur permet de s'affranchir d'une étape supplémentaire de passivation du catalyseur par un composé oxygéné ou par le CO₂ , ce qui est nécessairement le cas lorsque le catalyseur est préparé en réalisant un traitement réducteur ex-situ, c'est-à-dire en dehors du réacteur utilisé pour l'hydrogénation sélective. En effet, lorsque le traitement réducteur est réalisé ex-situ, il est nécessaire de réaliser une étape de passivation afin de préserver la phase métallique du catalyseur en présence d'air (lors des opérations de transport et de chargement du catalyseur dans le réacteur d'hydrogénation), puis de réaliser une étape nouvelle étape de réduction du catalyseur.

Le gaz réducteur est de préférence l'hydrogène. L'hydrogène peut être utilisé pur ou en mélange (par exemple un mélange hydrogène/azote, hydrogène/argon, hydrogène/méthane). Dans le cas où l'hydrogène est utilisé en mélange, toutes les proportions sont envisageables.

Selon un aspect essentiel du procédé de préparation selon l'invention, ledit traitement réducteur est réalisé à une température inférieure à 200°C, de préférence comprise entre 130 et 190°C, et plus préférentiellement entre 145 et 175°C. La durée du traitement réducteur est comprise entre 5 minutes et moins de 2 heures, de préférence entre 10 minutes et 110 minutes. Le recours à des conditions opératoires moins sévères que dans l'art antérieur permet de réaliser directement l'étape de réduction au sein du réacteur dans lequel on souhaite réaliser l'hydrogénation sélective de coupes polyinsaturés. Par ailleurs, la présence de cuivre dans le catalyseur permet de conserver une bonne activité du catalyseur et une bonne durée de vie du catalyseur lorsque ce dernier est mis en contact avec une charge hydrocarbonée comprenant du soufre, notamment les coupes d'hydrocarbures C3 de vapocraquage et/ou de craquage catalytique. En effet, par rapport au nickel, le cuivre présent dans le catalyseur capte plus facilement les composés soufrés compris dans la charge, ce qui évite donc d'empoisonner irréversiblement les sites actifs les plus virulents du nickel qui existent sur le catalyseur neuf.

La montée en température jusqu'à la température de réduction désirée est généralement lente, par exemple fixée entre 0,1 et 10°C/min, de préférence entre 0,3 et 7°C/min.

Le débit d'hydrogène, exprimé en L/heure/gramme de précurseur de catalyseur est compris entre 0,01 et 100 L/heure/gramme de catalyseur, de préférence entre 0,05 et 10 L/heure/gramme de précurseur de catalyseur, de façon encore plus préférée entre 0,1 et 5 L/heure/gramme de précurseur de catalyseur.

### Etape e) Passivation

Le catalyseur préparé selon le procédé selon l'invention subit une étape de passivation par un composé soufré qui permet d'améliorer la sélectivité des catalyseurs et d'éviter les emballements thermiques lors des démarrages de catalyseurs neufs (« *run away* » selon la terminologie anglo-saxonne). La passivation consiste généralement à empoisonner irréversiblement par le composé soufré les sites actifs les plus virulents du nickel qui existent sur le catalyseur neuf et donc à atténuer l'activité du catalyseur en faveur de sa sélectivité.

L'étape de passivation est réalisée par la mise en oeuvre de méthodes connues de l'Homme du métier

L'étape de passivation par un composé soufré est généralement effectuée à une température comprise entre 20 et 350°C, de préférence entre 40 et 200°C, pendant 10 à 240 minutes. Le composé soufré est par exemple choisi parmi les composés suivants: thiophène, thiophane, alkylmonosulfures tels que diméthylsulfure, diéthylsulfure, dipropylsulfure et propylméthylsulfure ou encore un disulfure organique de formule HO-R₁-S-S-R₂-OH tel que le di-thio-di-éthanol de formule HO-C₂H₄-S-S-C₂H₄-OH (appelé souvent DEODS). La teneur en soufre est généralement comprise entre 0,1 et 2 % poids dudit élément par rapport au poids total du catalyseur.

### Catalyseur

Le catalyseur susceptible d'être obtenu par le procédé de préparation selon l'invention comprend une phase active à base de nickel et de cuivre, et un support contenant un oxyde réfractaire choisi parmi la silice, l'alumine, la silice-alumine.

Les quantités du ou des précurseurs de cuivre introduites dans la solution sont choisies de telle manière que la teneur totale en cuivre est comprise entre 0,5 et 15 % en poids en élément cuivre par rapport au poids total du catalyseur, de préférence comprise entre 0,5 et 12 % poids, de manière préférée comprise entre 0,75 et 10 % poids, et encore plus préférentiellement entre 1 et 9 % en poids. La présence de cuivre améliore fortement la réductibilité du nickel sur le support, et cela quel que soit l'ordre d'ajout des précurseurs métalliques (nickel et cuivre), ce qui permet de réaliser une étape de réduction des éléments métalliques en présence d'un gaz réducteur à des températures plus basses et des temps de réaction plus court que ceux couramment utilisés dans l'art antérieur.

La teneur en nickel est comprise entre 10 et 50 % poids, de préférence comprise entre 14 et 45 % poids, de manière préférée comprise entre 20 et 40 % poids dudit élément par rapport au poids total du catalyseur.

Le ratio molaire entre le cuivre et le nickel doit être inférieur à 1, de préférence inférieur à 0,8, plus préférentiellement inférieur à 0,7, encore plus préférentiellement inférieur à 0,6, de manière préférée inférieur à 0,5, et de manière encore plus préférée inférieur à 0,4.

Le support poreux est choisi parmi le groupe constitué par la silice, l'alumine et la silice-alumine. De façon encore plus préférée, le support est de l'alumine. L'alumine peut être présente sous toutes les formes cristallographiques possibles : alpha, delta, théta, chi, rho, eta , kappa, gamma, etc., prises seules ou en mélange. De manière préférée le support est choisi parmi l'alumine alpha, delta, thêta, gamma.

La surface spécifique du support est généralement supérieure ou égale à 30 m²/g, de préférence supérieure ou égale à 50 m²/g, plus préférentiellement comprise entre 60 m²/g et 500 m²/g, et encore plus préférentiellement comprise entre 70 m²/g et 400 m²/g. La surface spécifique BET est mesurée par physisorption à l'azote.

Le volume total poreux du support est généralement compris entre 0,1 et 1,5 cm³/g, de préférence compris entre 0,35 et 1,2 cm³/g, et encore plus préférentiellement compris entre 0,4 et 1,0 cm³/g, et encore plus préférentiellement entre 0,45 et 0,9 cm³/g.

Ledit catalyseur est généralement présenté sous toutes les formes connues de l'Homme du métier, par exemple sous forme de billes (ayant généralement un diamètre compris entre 1 et 8 mm), d'extrudés, de tablettes, de cylindres creux. De préférence, il est constitué d'extrudés de diamètre généralement compris entre 0,5 et 10 mm, de préférence entre 0,8 et 3,2 mm et de manière très préférée entre 1,0 et 2,5 mm et de longueur moyenne comprise entre 0,5 et 20 mm. On entend par « diamètre moyen » des extrudés le diamètre moyen du cercle circonscrit à la section droite de ces extrudés. Le catalyseur peut être avantageusement présenté sous la forme d'extrudés cylindriques, multilobés, trilobés ou quadrilobés. De préférence sa forme sera trilobée ou quadrilobée. La forme des lobes pourra être ajustée selon toutes les méthodes connues de l'art antérieur.

La surface spécifique du support est généralement supérieure ou égale à 30 m²/g, de préférence supérieure ou égale à 50 m²/g, plus préférentiellement comprise entre 60 m²/g et 500 m²/g, et encore plus préférentiellement comprise entre 70 m²/g et 400 m²/g.

Le volume total poreux du catalyseur est généralement compris entre 0,1 et 1,5 cm³/g, de préférence compris entre 0,35 et 1,2 cm³/g, et encore plus préférentiellement compris entre 0,4 et 1,0 cm³/g, et encore plus préférentiellement entre 0,45 et 0,9 cm³/g.

Le catalyseur présente avantageusement un volume macroporeux inférieur ou égal à 0,6 mL/g, de préférence inférieur ou égal à 0,5 mL/g, plus préférentiellement inférieur ou égal à 0,4 mL/g, et encore plus préférentiellement inférieur ou égal à 0,3 mL/g.

Le volume mésoporeux du catalyseur est généralement d'au moins 0,10 mL/g, de préférence d'au moins 0,20 mL/g, de manière préférée compris entre 0,25 mL/g et 0,80 mL/g, de manière plus préférée entre 0,30 et 0,65 mL/g.

Le diamètre médian mésoporeux est avantageusement compris entre 3 nm et 25 nm, et de préférence entre 6 et 20 nm, et de manière particulièrement préférée compris entre 8 et 18 nm.

Le catalyseur présente avantageusement un diamètre médian macroporeux compris entre 50 et 1500 nm, de préférence entre 80 et 1000 nm, de manière encore plus préférée compris entre 250 et 800 nm.

De préférence, le catalyseur présente une faible microporosité, de manière très préférée il ne présente aucune microporosité.

### Procédé d'hydrogénation des aromatiques

La présente invention a également pour objet un procédé d'hydrogénation d'au moins un composé aromatique ou polyaromatique contenu dans une charge d'hydrocarbures ayant un point d'ébullition final inférieur ou égal à 650°C, généralement entre 20 et 650°C, et de préférence entre 20 et 450°C. Ladite charge d'hydrocarbures contenant au moins un composé aromatique ou polyaromatique peut être choisi parmi les coupes pétrolières ou pétrochimiques suivantes : le reformat du reformage catalytique, le kérosène, le gazole léger, le gazole lourd, les distillats de craquage, tels que l'huile de recyclage de FCC, le gazole d'unité de cokéfaction, les distillats d'hydrocraquage.

La teneur en composés aromatiques ou polyaromatiques contenus dans la charge d'hydrocarbures traitée dans le procédé d'hydrogénation selon l'invention est généralement compris entre 0,1 et 80% en poids, de préférence entre 1 et 50% en poids, et de manière particulièrement préférée entre 2 et 35% en poids, le pourcentage étant basé sur le poids total de la charge d'hydrocarbures. Les composés aromatiques présents dans ladite charge d'hydrocarbures sont par exemple le benzène ou des alkylaromatiques tels que le toluène, l'éthylbenzène, l'o-xylène, le m-xylène, ou le p-xylène, ou encore des aromatiques ayant plusieurs noyaux aromatiques (polyaromatiques) tels que le naphtalène.

La teneur en soufre ou en chlore de la charge est généralement inférieure à 5000 ppm poids de soufre ou de chlore, de préférence inférieure à 100 ppm poids, et de manière particulièrement préférée inférieure à 10 ppm poids.

La mise en oeuvre technologique du procédé d'hydrogénation des composés aromatiques ou polyaromatiques est par exemple réalisée par injection, en courant ascendant ou descendant, de la charge d'hydrocarbures et de l'hydrogène dans au moins un réacteur à lit fixe. Ledit réacteur peut être de type isotherme ou de type adiabatique. Un réacteur adiabatique est préféré. La charge d'hydrocarbures peut avantageusement être diluée par une ou plusieurs ré-injection(s) de l'effluent, issu dudit réacteur où se produit la réaction d'hydrogénation des aromatiques, en divers points du réacteur, situés entre l'entrée et la sortie du réacteur afin de limiter le gradient de température dans le réacteur. La mise en oeuvre technologique du procédé d'hydrogénation des aromatiques selon l'invention peut également être avantageusement réalisée par l'implantation d'au moins dudit catalyseur supporté dans une colonne de distillation réactive ou dans des réacteurs - échangeurs ou dans un réacteur de type slurry. Le flux d'hydrogène peut être introduit en même temps que la charge à hydrogéner et/ou en un ou plusieurs points différents du réacteur.

L'hydrogénation des composés aromatiques ou polyaromatiques peut être réalisée en phase gazeuse ou en phase liquide, de préférence en phase liquide. D'une manière générale, l'hydrogénation des composés aromatiques ou polyaromatiques s'effectue à une température comprise entre 30 et 350°C, de préférence entre 50 et 325°C, à une pression comprise entre 0,1 et 20 MPa, de préférence entre 0,5 et 10 MPa, à un ratio molaire hydrogène/(composés aromatiques à hydrogéner) entre 0,1 et 10 et à une vitesse volumique horaire V.V.H. comprise entre 0,05 et 50 h⁻¹, de préférence entre 0,1 et 10 h⁻¹ d'une charge d'hydrocarbures contenant des composés aromatiques ou polyaromatiques et ayant un point d'ébullition final inférieur ou égal à 650°C, généralement entre 20 et 650°C, et de préférence entre 20 et 450°C.

Le débit d'hydrogène est ajusté afin d'en disposer en quantité suffisante pour hydrogéner théoriquement l'ensemble des composés aromatiques et de maintenir un excès d'hydrogène en sortie de réacteur.

La conversion des composés aromatiques ou polyaromatiques est généralement supérieure à 20% en mole, de préférence supérieure à 40% en mole, de manière plus préférée supérieure à 80% en mole, et de manière particulièrement préférée supérieure à 90 % en mole des composés aromatiques ou polyaromatiques contenus dans la charge hydrocarbonée. La conversion se calcule en divisant la différence entre les moles totales des composés aromatiques ou polyaromatiques dans la charge d'hydrocarbures et dans le produit par les moles totales des composés aromatiques ou polyaromatiques dans la charge d'hydrocarbures.

Selon une variante particulière du procédé selon l'invention, on réalise un procédé d'hydrogénation du benzène d'une charge d'hydrocarbures, tel que le reformat issu d'une unité de reformage catalytique. La teneur en benzène dans ladite charge d'hydrocarbures est généralement comprise entre 0,1 et 40% poids, de préférence entre 0,5 et 35% poids, et de manière particulièrement préférée entre 2 et 30% poids, le pourcentage en poids étant basé sur le poids total de la charge d'hydrocarbures.

La teneur en soufre ou en chlore de la charge est généralement inférieure à 10 ppm poids de soufre ou chlore respectivement, et de préférence inférieure à 2 ppm poids.

L'hydrogénation du benzène contenu dans la charge d'hydrocarbures peut être réalisée en phase gazeuse ou en phase liquide, de préférence en phase liquide. Lorsqu'elle est réalisée en phase liquide, un solvant peut être présent, tel que le cyclohexane, l'heptane, l'octane. D'une manière générale, l'hydrogénation du benzène s'effectue à une température comprise entre 30 et 250°C, de préférence entre 50 et 200°C, et de manière plus préférée entre 80 et 180°C, à une pression comprise entre 0,1 et 10 MPa, de préférence entre 0,5 et 4 MPa, à un ratio molaire hydrogène/(benzène) entre 0,1 et 10 et à une vitesse volumique horaire V.V.H. comprise entre 0,05 et 50 h⁻¹, de préférence entre 0,5 et 10 h⁻¹.

La conversion du benzène est généralement supérieure à 50% en mole, de préférence supérieure à 80% en mole, de manière plus préférée supérieure à 90% en mole et de manière particulièrement préférée supérieure à 98 % en mole.

L'invention va maintenant être illustré via les exemples ci-après qui ne sont nullement limitatifs.

### Exemples

Pour tous les catalyseurs mentionnés dans les exemples mentionnées ci-après, le support est une alumine A présentant une surface spécifique de 80 m²/g, un volume poreux de 0,7 mL/g et un diamètre poreux médian de 12 nm.

### Exemple 1 : Préparation d'une solution aqueuse de précurseurs de Ni

La solution aqueuse de précurseurs de Ni (solution S) utilisée pour la préparation des catalyseurs A à G est préparée en dissolvant 29 g de nitrate de nickel Ni(NO₃)₂.6H₂O (fournisseur Strem Chemicals^{®}) dans un volume de 13 mL d'eau distillée. On obtient la solution S dont la concentration en Ni est de 230 g de Ni par litre de solution.

### Exemple 2 : Catalyseur A - 20% en poids de Ni (comparatif)

Deux solutions S préparées à l'exemple 1 sont imprégnées à sec successivement sur 10 g d'alumine A (deux cycles d'imprégnation). Le solide ainsi obtenu est ensuite séché en étuve pendant une nuit à 120°C, puis calciné sous un flux d'air de 1 L/h/g de catalyseur à 450°C pendant 2 heures. Le catalyseur calciné ainsi préparé contient 20 % en poids de l'élément nickel par rapport au poids total du catalyseur supporté sur alumine.

### Exemple 3 : Catalyseur B - 20% en poids de Ni + 0,1% de Cu en pré-imprégnation (comparatif)

### - Imprégnation n° 1

Une solution de nitrate de cuivre préparée de sorte à obtenir au final 0,1% pds de Cu sur le catalyseur final est imprégnée à sec sur l'alumine A. Le solide ainsi obtenu est ensuite séché en étuve pendant une nuit à 120°C.

### - Imprégnations n° 2 et 3

Deux solutions S préparées à l'exemple 1 sont imprégnées à sec successivement (deux cycles d'imprégnation) sur 10 g du précurseur de catalyseur précédemment préparé lors de l'imprégnation n°1 du cuivre. Le solide ainsi obtenu est ensuite séché en étuve pendant une nuit à 120°C, puis calciné sous un flux d'air de 1 L/h/g de catalyseur à 450°C pendant 2 heures.

### Exemple 4 : Catalyseur C - 20% en poids de Ni +1% en poids de Cu en pré-imprégnation (selon l'invention)

Le protocole utilisé dans cet exemple est identique à celui de l'exemple 3 ci-avant, à l'exception qu'on prépare une solution de nitrate de cuivre permettant de mettre 1% pds de Cu sur l'alumine.

### Exemple 5 : Catalyseur D - 20% en poids de Ni + 1% en poids de Cu en co-imprégnation comparatif)

Une solution de nitrate de cuivre est préparée de sorte à obtenir au final 1% poids en élément cuivre sur le catalyseur final. On ajoute en même temps la solution de cuivre et la solution S sur l'alumine (co-imprégnation). On réalise par la suite une deuxième étape d'imprégnation de la solution S sur le précurseur de catalyseur obtenu à l'issue de la première étape de co-imprégnation.

Le solide ainsi obtenu est ensuite séché en étuve pendant 12h à 120°C, puis calciné sous un flux d'air de 1 L/h/g de catalyseur à 450°C pendant 2 heures.

### Exemple 6 : Catalyseur F - 20% en poids de Ni + 2% en poids de Cu en post-imprégnation (selon l'invention)

### - Imprégnations n° 1 et 2

Deux solutions S préparées à l'exemple 1 sont imprégnées à sec successivement sur 10 g d'alumine A (deux cycles d'imprégnation). Le solide ainsi obtenu est ensuite séché en étuve pendant 12h à 120°C.

### - Imprégnation n° 3

Une solution de nitrate de cuivre est préparée de sorte à obtenir au final 2% poids en élément cuivre sur le catalyseur final puis est imprégnée à sec sur le précurseur de catalyseur issue de la seconde étape d'imprégnation de la solution S.

Le solide ainsi obtenu est ensuite séché en étuve pendant 12h à 120°C, puis calciné sous un flux d'air de 1 L/h/g de catalyseur à 450°C pendant 2 heures.

### Exemple 7 : Catalyseur E - 20% en poids de Ni + 2% en poids de Cu en pré-imprégnation (selon l'invention)

Le protocole utilisé dans cet exemple est identique à celui de l'exemple 3 ci-avant, à l'exception qu'on prépare une solution de nitrate de cuivre permettant de mettre 2% pds de Cu sur l'alumine.

### Exemple 8 : Catalyseur G - 20% en poids de Ni +5% en poids de Cu en pré-imprégnation (selon l'invention)

Le protocole utilisé dans cet exemple est identique à celui de l'exemple 3 ci-avant, à l'exception qu'on prépare une solution de nitrate de cuivre permettant de mettre 5% pds de Cu sur l'alumine.

### Exemple 9 : Caractérisation

Tous les catalyseurs contiennent les teneurs visées lors de l'imprégnation c'est-à-dire 20% en élément nickel (caractérisé par Fluorescence X) par rapport au poids total du catalyseur, et le % de Cuivre ajouté (caractérisé par Fluorescence X).

La quantité de nickel sous forme métallique obtenue après l'étape de réduction a été déterminée par analyse par diffraction des rayons X (DRX) sur des échantillons de catalyseur sous forme de poudre. Entre l'étape de réduction, et, pendant toute la durée de la caractérisation par DRX les catalyseurs ne sont jamais remis à l'air libre. Les diagrammes de diffraction sont obtenus par analyse radiocristallographique au moyen d'un diffractomètre en utilisant la méthode classique des poudres avec le rayonnement Kα1 du cuivre (λ = 1,5406 Å).

Le taux de réduction a été calculé en calculant l'aire de la raie de Ni⁰ située vers 52°2θ, sur l'ensemble des diffractogrammes de chaque échantillon de catalyseur analysé, puis en soustrayant le signal présent dès la température ambiante sous la raie à 52° et qui est dû à l'alumine. A température ambiante sur tous les catalyseurs, après calcination, contenant du cuivre et du nickel, de l'alumine sous forme delta et thêta, du CuO (tenorite) et du NiO ont été détectés.

Le tableau 1 ci-après rassemble les taux de réduction (exprimée en % poids par rapport au poids total de Ni) pour tous les catalyseurs A à G caractérisés par DRX après une étape de réduction à 170°C pendant 90 minutes sous flux d'hydrogène. Ces valeurs ont également été comparées avec le taux de réduction obtenu pour le catalyseur A (Ni seul) après une étape de réduction classique (c'est-à-dire à une température de 400C° pendant 15 heures sous flux d'hydrogène).

Pour le catalyseur G (5%Cu/20%Ni/alumine) après 90 minutes à 170 °C sous flux d'hydrogène (H₂), le taux de réductibilité de nickel est de 100% et le taux de réductibilité de cuivre également. Pour le catalyseur A (20%Ni seul/alumine), le taux de réductibilité de nickel est de 0% après exactement le même traitement de réduction sous hydrogène. Le cuivre permet bien de réduire tout le nickel oxyde présent sur le support en Nickel réduit (Ni°).

Par ailleurs, les catalyseurs contenant à la fois du cuivre et du nickel ont été traités sous flux de sulfure d'hydrogène avec une montée en température jusqu'à 300°C. Les spectres DRX ont été enregistrés et analysés en fonction du temps et de la température. Il a été analysé que la phase NiO se sulfure en Ni₃S₄ et NiS et la phase de CuO s'oxyde en Cu_{1.75}S. Par ailleurs l'oxyde de cuivre est l'espèce qui se sulfure la première. Cela montre que les catalyseurs préparés le procédé selon l'invention seront plus résistants aux charges soufrées par rapport à des catalyseurs préparés de manière connue, sans présence de cuivre. En effet le cuivre captera en priorité le soufre, le Ni° restant disponible pour l'hydrogénation des différents composés de la charge à traiter.

Le Tableau 1 ci-dessous récapitule les taux de réductibilité pour tous les catalyseurs caractérisés par DRX après réduction à 170°C pendant 90 minutes sous flux d'hydrogène. Pour comparaison avec une réduction classique nous avons également ajouté pour le Ni seul/alumine, la teneur en Ni° après réduction classique 15 h à 400°C sous flux d'hydrogène. Dès l'ajout de 1% cuivre en pré-imprégnation le taux de réductibilité de nickel est de 50% alors que pour le même traitement sous H₂ pour le catalyser Ni seul, le taux de réductibilité de nickel est nul. Par ailleurs, avec une même quantité de cuivre ajoutée et un même traitement sous H₂, l'ajout de cuivre en pré-imprégnation (catalyseur C, 50% de Ni°) est plus efficace que l'ajout de cuivre en post-imprégnation (catalyseur E, 40% de Ni°), qui lui-même est plus performant que l'ajout de cuivre en co-imprégnation (catalyseur D, 30% de Ni°). Par ailleurs, l'ajout de 2% de cuivre (Catalyseur F, 80% de Ni°) conduit au même taux de réductibilité de nickel que le catalyseur A qui a subi un traitement à plus haute température (400°C) et pour une durée plus longue (15h). Au final avec l'ajout de 5% de cuivre (catalyseur G) on atteint 100% de Ni° pour un traitement sous H₂ à 170°C pendant 90 minutes.

**Tableau 1 : Teneur en Ni° après réduction à 170°C pendant 90 minutes pour l'ensemble des catalyseurs et également à 400°C pendant 15 heures pour le catalyseur Ni seul/alumine**

| Catalyseur | Réduction | Teneur en Cuivre (%) | Imprégnation du Cuivre | Pourcentage de Ni° (DRX) après réduction (%) |
|---|---|---|---|---|
| A (comparatif) | 400°C, 15h | 0 | - | 80 |
| A (comparatif) | 170°C, 90 min | 0 | - | 0 |
| B (comparatif) | 170°C, 90 min | 0,1 | Pré-imprégnation | 25 |
| C (invention) | 170°C, 90 min | 1 | Pré-imprégnation | 50 |
| D (comparatif) | 170°C, 90 min | 1 | Co-imprégnation | 30 |
| E (invention) | 170°C, 90 min | 1 | post-imprégnation | 45 |
| F (invention) | 170°C, 90 min | 2 | Pré-imprégnation | 80 |
| G (invention) | 170°C, 90 min | 5 | Pré-imprégnation | 100 |

### Exemple 10 : Test catalytiques : performances en hydrogénation du toluène

Les catalyseurs A à G décrits dans les exemples ci-dessus sont également testés vis-à-vis de la réaction d'hydrogénation du toluène.

La réaction d'hydrogénation est opérée dans un autoclave de 500 mL en acier inoxydable, muni d'une agitation mécanique à entraînement magnétique et pouvant fonctionner sous une pression maximale de 100 bar (10 MPa) et des températures comprises entre 5°C et 200°C.

Dans un autoclave sont ajoutés 216 mL de n-heptane (fournisseur VWR^{®}, pureté > 99% chromanorm HPLC) et 2 ml de catalyseur (pour les catalyseur de A à G). Ensuite l'autoclave est pressurisé sous 35 bar (3,5 MPa) d'hydrogène. Le catalyseur est d'abord réduit *in situ,* à 170°C pendant 90 minutes (rampe de montée en température de 1 °C/min) pour les catalyseurs A à G.

Ensuite l'autoclave est porté à la température du test égale à 80°C. Au temps t=0, environ 26 g de toluène (fournisseur SDS^{®}, pureté > 99.8%) sont introduits dans l'autoclave (la composition initiale du mélange réactionnel est alors toluène 6 %pds / n-heptane 94 %pds) et l'agitation est mise en route à 1600 tr/min. La pression est maintenue constante à 35 bar (3,5 MPa) dans l'autoclave à l'aide d'une bouteille réservoir située en amont du réacteur.

Un autre test a été effectué pour le catalyseur A, mais avec une température de réduction du catalyseur de 400°C pendant 15 heures.

L'avancement de la réaction est suivi par prélèvement d'échantillons du milieu réactionnel à intervalles de temps réguliers : le toluène est totalement hydrogéné en méthylcyclohexane. La consommation d'hydrogène est également suivie au cours du temps par la diminution de pression dans une bouteille réservoir située en amont du réacteur.

Les activités catalytiques mesurées pour les catalyseurs A à G sont reportées dans le tableau 2 ci-après. Elles sont rapportées à l'activité catalytique (A_{HYD}) mesurée pour le catalyseur A préparé dans les conditions classiques de réduction (à une température de 400C° pendant 15 heures sous flux d'hydrogène).

**Tableau 2 : Comparaison des performances en hydrogénation du toluène**

| Catalyseur | Réduction | Teneur en Cuivre (%) | Pourcentage de Ni° (DRX) après réduction (%) | A_{HYD} (%) |
|---|---|---|---|---|
| A (comparatif) | 400°C, 15h | 0 | 80 | 100 |
| A (comparatif) | 170°C, 90 min | 0 | 0 | 0 |
| B (comparatif) | 170°C, 90 min | 0,1 | 25 | 45 |
| C (invention) | 170°C, 90 min | 1 | 50 | 101 |
| D (comparatif) | 170°C, 90 min | 1 | 30 | 58 |
| E (invention) | 170°C, 90 min | 1 | 45 | 90 |
| F (invention) | 170°C, 90 min | 2 | 80 | 150 |
| G (invention) | 170°C, 90 min | 5 | 100 | 210 |

Ceci montre bien les performances améliorées des catalyseurs C, E, F et G selon l'invention, par rapport au catalyseur Ni seul sur alumine réduit à 170°C pendant 90 min, qui est complètement inactif et en particulier l'impact de l'addition d'un précurseur de cuivre avant ou après l'addition d'un précurseur de nickel au sein du précurseur de catalyseur lors de son procédé de préparation.

## Revendications

1. Procédé de préparation d'un catalyseur d'hydrogénation de composés aromatiques ou polyaromatiques comprenant une phase active bimétallique à base d'un premier élément métallique de nickel, à raison de 10 et 50 % en poids en élément nickel par rapport au poids total du catalyseur, et d'un second élément métallique de cuivre, à raison de 0,5 à 15 % en poids en élément cuivre par rapport au poids total du catalyseur, le ratio molaire entre le cuivre et le nickel étant inférieur à 1, et un support comprenant au moins un oxyde réfractaire choisi parmi la silice, l'alumine et la silice-alumine, lequel procédé comprenant les étapes suivantes :
a) on réalise au moins une étape de mise en contact du support avec au moins une solution contenant au moins un précurseur de nickel ;
b) on réalise une étape de mise en contact par imprégnation du support avec au moins une solution aqueuse contenant au moins un précurseur de cuivre au moins partiellement à l'état dissous ;
les étapes a) et b) étant réalisées séparément dans un ordre indifférent ;
c) on réalise au moins une étape de séchage du précurseur de catalyseur à l'issue de l'étape a) et b), ou b) et a), à une température inférieure à 250°C ;
d) on approvisionne le précurseur de catalyseur obtenu à l'issue de l'étape c) dans un réacteur d'hydrogénation de composés aromatiques, et on effectue une étape de réduction par mise en contact dudit précurseur avec un gaz réducteur à une température inférieure à 200°C, pendant une période supérieure ou égale à 5 minutes et inférieure 2 heures ;
e) on réalise une étape de passivation du catalyseur obtenu à l'étape d) par un composé soufré.

2. Procédé selon la revendication 1, dans lequel on réalise l'étape b) avant l'étape a).

3. Procédé selon l'une des revendications 1 ou 2, dans lequel l'étape d) est réalisée à une température comprise entre 130 et 190°C.

4. Procédé selon l'une quelconque des revendications 1 à 3, dans lequel l'étape d) est réalisée entre 10 minutes et 110 minutes.

5. Procédé selon l'une quelconque des revendications 1 à 4, dans lequel l'étape e) est réalisée à une température comprise entre 20 et 350°C pendant 10 à 240 minutes.

6. Procédé selon l'une quelconque des revendications 1 à 5, dans lequel à l'étape e) le composé soufré est choisi parmi le thiophène, le thiophane, le diméthylsulfure, le diéthylsulfure, le dipropylsulfure, le propylméthylsulfure, le di-thio-di-éthanol.

7. Procédé selon l'une quelconque des revendications 1 à 6 dans lequel on réalise entre l'étape a) et b) une étape de séchage du précurseur de catalyseur à une température inférieure à 250°C.

8. Procédé selon l'une quelconque des revendications 1 à 7, dans lequel la teneur en cuivre est comprise entre de 0,5 et 12 % poids en élément cuivre par rapport au poids total du catalyseur.

9. Procédé selon l'une quelconque des revendications 1 à 8, dans lequel le précurseur de cuivre est choisi parmi l'acétate de cuivre, l'acétylacétonate de cuivre, le nitrate de cuivre, le sulfate de cuivre, le chlorure de cuivre, le bromure de cuivre, l'iodure de cuivre ou le fluorure de cuivre.

10. Procédé selon la revendication 9, dans lequel le précurseur de cuivre est le nitrate de cuivre.

11. Procédé selon l'une quelconque des revendications 1 à 10, dans lequel le gaz réducteur de l'étape d) est le dihydrogène.

12. Procédé selon la revendication 11, dans lequel le débit d'hydrogène, exprimé en L/heure/gramme de précurseur de catalyseur est compris entre 0,01 et 100 L/heure/gramme de précurseur de catalyseur.

13. Procédé selon l'une quelconque des revendications 1 à 12, dans lequel on réalise avant l'étape d) une étape de traitement thermique du précurseur de catalyseur séché obtenu à l'étape c) à une température comprise entre 250 et 1000°C.

14. Procédé selon l'une quelconque des revendications 1 à 13, dans lequel le support est une alumine.

## Patentansprüche

1. Verfahren zur Herstellung eines Katalysators für die Hydrierung von aromatischen oder polyaromatischen Verbindungen, umfassend eine bimetallische aktive Phase auf Basis eines ersten Nickel-Metallelements in einer Menge von 10 und 50 Gew.-% Nickelelement, bezogen auf das Gesamtgewicht des Katalysators, und eines zweiten Kupfer-Metallelements in einer Menge von 0,5 bis 15 Gew.-% Kupferelement, bezogen auf das Gesamtgewicht des Katalysators, wobei das Molverhältnis zwischen dem Kupfer und dem Nickel weniger als 1 beträgt, und einen Träger, der mindestens ein aus Siliciumdioxid, Aluminiumoxid und Siliciumdioxid-Aluminiumoxid ausgewähltes refraktäres Oxid umfasst, wobei das Verfahren die folgenden Schritte umfasst:
a) Durchführen mindestens eines Schritts des Inkontaktbringens des Trägers mit mindestens einer Lösung, die mindestens einen Nickelvorläufer enthält;
b) Durchführen eines Schritts des Inkontaktbringens des Trägers mit mindestens einer wässrigen Lösung, die mindestens einen Kupfervorläufer in zumindest teilweise gelöstem Zustand enthält, durch Imprägnierung;
wobei die Schritte a) und b) separat in beliebiger Reihenfolge durchgeführt werden;
c) Durchführen mindestens eines Schritts des Trocknens des Katalysatorvorläufers am Ende von Schritt a) und b) oder b) und a) bei einer Temperatur von weniger als 250 °C;
d) Einbringen des am Ende von Schritt c) erhaltenen Katalysatorvorläufers in einen Reaktor für die Hydrierung von aromatischen Verbindungen und Durchführen eines Reduktionsschritts durch Inkontaktbringen des Vorläufers mit einem reduzierenden Gas bei einer Temperatur von weniger als 200 °C über einen Zeitraum größer als oder gleich 5 Minuten und weniger als 2 Stunden;
e) Durchführen eines Schritts des Passivierens des in Schritt d) erhaltenen Katalysators mit einer Schwefelverbindung.

2. Verfahren nach Anspruch 1, wobei man Schritt b) vor Schritt a) durchführt.

3. Verfahren nach Anspruch 1 oder 2, wobei Schritt d) bei einer Temperatur zwischen 130 und 190 °C durchgeführt wird.

4. Verfahren nach einem der Ansprüche 1 bis 3, wobei Schritt d) zwischen 10 Minuten und 110 Minuten lang durchgeführt wird.

5. Verfahren nach einem der Ansprüche 1 bis 4, wobei Schritt c) bei einer Temperatur zwischen 20 und 350 °C über einen Zeitraum von 10 bis 240 Minuten durchgeführt wird.

6. Verfahren nach einem der Ansprüche 1 bis 5, wobei in Schritt e) die Schwefelverbindung aus Thiophen, Thiophan, Dimethylsulfid, Diethylsulfid, Dipropylsulfid, Propylmethylsulfid und Dithiodiethanol ausgewählt wird.

7. Verfahren nach einem der Ansprüche 1 bis 6, wobei man zwischen Schritt a) und b) einen Schritt des Trocknens des Katalysatorvorläufers bei einer Temperatur von weniger als 250 °C durchführt.

8. Verfahren nach einem der Ansprüche 1 bis 7, wobei der Kupfergehalt zwiscen 0,5 und 12 Gew.-% Kupferelement, bezogen auf das Gesamtgewicht des Katalysators, liegt.

9. Verfahren nach einem der Ansprüche 1 bis 8, wobei der Kupfervorläufer aus Kupferacetat, Kupferacetylacetonat, Kupfernitrat, Kupfersulfat, Kupferchlorid, Kupferbromid, Kupferiodid oder Kupferfluorid ausgewählt wird.

10. Verfahren nach Anspruch 9, wobei es sich bei dem Kupfervorläufer um Kupfernitrat handelt.

11. Verfahren nach einem der Ansprüche 1 bis 10, wobei es sich bei dem reduzierenden Gas in Schritt d) um Diwasserstoff handelt.

12. Verfahren nach Anspruch 11, wobei die Wasserstoff-Durchflussrate, ausgedrückt in l/Stunde/Gramm Katalysatorvorläufer, zwischen 0,01 und 100 l/Stunde/Gramm Katalysatorvorläufer liegt.

13. Verfahren nach einem der Ansprüche 1 bis 12, wobei man vor Schritt d) einen Schritt der Wärmebehandlung des in Schritt c) erhaltenen getrockneten Katalysatorvorläufers bei einer Temperatur zwischen 250 und 1000 °C durchführt.

14. Verfahren nach einem der Ansprüche 1 bis 13, wobei es sich bei dem Träger um ein Aluminiumoxid handelt.

## Claims

1. Method for preparing a catalyst for the hydrogenation of aromatic or polyaromatic compounds comprising a bimetallic active phase based on a first nickel metal element, in a proportion of 10 and 50% by weight of nickel element relative to the total weight of the catalyst, and a second copper metal element, in a proportion of 0.5 to 15% by weight of copper element relative to the total weight of the catalyst, the molar ratio between the copper and the nickel being less than 1, and a support comprising at least one refractory oxide chosen from silica, alumina and silica-alumina, said method comprising the following steps:
a) at least one step of bringing the support into contact with at least one solution containing at least one nickel precursor is carried out;
b) a step of bringing the support into contact with at least one aqueous solution containing at least one copper precursor at least partially in the dissolved state is carried out by impregnation;
the steps a) and b) being carried out separately in either order;
c) at least one step of drying the catalyst precursor at the end of step a) and b), or b) and a), at a temperature lower than 250°C is carried out;
d) the catalyst precursor obtained at the end of step c) is supplied to a reactor for the hydrogenation of aromatic compounds, and a step of reduction by bringing said precursor into contact with a reducing gas at a temperature lower than 200°C for a period greater than or equal to 5 minutes and less than 2 hours is carried out;
e) a step of passivation of the catalyst obtained in step d) with a sulfur compound is carried out.

2. Method according to Claim 1, wherein step b) is carried out before step a).

3. Method according to either of Claims 1 and 2, wherein step d) is carried out at a temperature of between 130 and 190°C.

4. Method according to any one of Claims 1 to 3, wherein step d) is carried out for between 10 minutes and 110 minutes.

5. Method according to any one of Claims 1 to 4, wherein step e) is carried out at a temperature of between 20 and 350°C for 10 to 240 minutes.

6. Method according to any one of Claims 1 to 5, wherein, in step e), the sulfur-containing compound is chosen from thiophene, thiophane, dimethyl sulfide, diethyl sulfide, dipropyl sulfide, propylmethyl sulfide and dithiodiethanol.

7. Method according to any one of Claims 1 to 6, wherein a step of drying the catalyst precursor is carried out between step a) and step b), at a temperature less than 250°C.

8. Method according to any one of Claims 1 to 7, wherein the copper content is between 0.5 and 12% by weight of copper element relative to the total weight of the catalyst.

9. Method according to any one of Claims 1 to 8, wherein the copper precursor is chosen from copper acetate, copper acetylacetonate, copper nitrate, copper sulfate, copper chloride, copper bromide, copper iodide or copper fluoride.

10. Method according to Claim 9, wherein the copper precursor is copper nitrate.

11. Method according to any one of Claims 1 to 10, wherein the reducing gas of step d) is dihydrogen.

12. Method according to Claim 11, wherein the hydrogen flow rate, expressed in l/hour/gram of catalyst precursor is between 0.01 and 100 l/hour/gram of catalyst precursor.

13. Method according to any one of Claims 1 to 12, wherein a step of heat treatment of the dried catalyst precursor obtained in step c) is carried out, before step d), at a temperature of between 250 and 1000°C.

14. Method according to any one of Claims 1 to 13, wherein the support is an alumina.
